Europäisches Patentamt

European Patent Office

Office européen des brevets

(11) Veröffentlichungsnummer: **0 077 872
B1**

(12) **EUROPÄISCHE PATENTSCHRIFT**

(45) Veröffentlichungstag der Patentschrift:
**05.10.88**

(51) Int. Cl.⁴: **E 02 B 3/12,** E 02 D 17/10,
**A 01 G 9/14**

(21) Anmeldenummer: **82102177.1**

(22) Anmeldetag: **17.03.82**

(54) **Abdeckeinrichtung.**

(30) Priorität: 23.10.81 DE 3142149
16.02.82 DE 3205383

(43) Veröffentlichungstag der Anmeldung:
**04.05.83 Patentblatt 83/18**

(45) Bekanntmachung des Hinweises auf die Patenterteilung:
**05.10.88 Patentblatt 88/40**

(84) Benannte Vertragsstaaten:
**AT BE CH FR GB IT LI NL SE**

(56) Entgegenhaltungen:
**FR - A - 1 230 736
FR - A - 2 292 078
FR - A - 2 432 580
GB - A - 916 016
US - A - 3 051 185
US - A - 3 653 150**

(73) Patentinhaber: **Carl, Heinz, Ing.grad., Waldstrasse 16,
D-8644 Pressig (DE)**

(72) Erfinder: **Carl, Heinz, Ing.grad., Waldstrasse 16,
D-8644 Pressig (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

**Beschreibung**

Die Erfindung bezieht sich auf eine Abdeckeinrichtung der im Oberbegriff von Anspruch 1 erläuterten Art. Sie bezieht sich weiterhin auf bevorzugte Anwendungsbeispiele.

Aus der FR-A-2 292 078 ist eine Abdeckeinrichtung in Form eines Frühbeetes für den Gartenbau bekannt, die aus einem Tragegerüst aus bogenförmigen Trägern besteht, die im Abstand zueinander angeordnet und mittels gegossener Ortbetonbalken im Erdboden verankert sind. Zwischen den bogenförmigen Trägern wird ein Netz aus längs- und querverlaufenden Drähten angeordnet, die zwischen den Drähten etwas durchhängen, so dass eine Vertiefung gebildet wird. Zum Abdecken der Gitteröffnungen wird eine ganz normale, durchsichtige bzw. durchscheinende Kunststoffolie verwendet, die einfach auf die Konstruktion aufgelegt und bevorzugt zusammen mit den Trägern im Ortbetonbalken verankert wird. Durch das durchhängende Gitterwerk wird eine Lagesicherung der Kunststoffolie erzielt. Die bekannte Abdeckeinrichtung ist jedoch relativ kompliziert in der Anwendung und kann nicht industriell vorgefertigt werden. Weiterhin ist ihre Anwendung nur auf die Form von Frühbeeten beschränkt.

Es ist weiterhin bekannt, beim Errichten von Gewässerbegrenzungen als Abdichtungsschicht auf die Böschung des Kernes eine einfache Folie zu legen. Üblicherweise wird diese Folie in Rollenform angeliefert und in einzelnen, sich überdeckenden Bahnen auf die Böschung aufgebracht. Anschliessend wird, um die Folie zu schützen und sie an der Böschung festzuhalten, eine Deckschicht aufgeschüttet. Bei diesem Verfahren muss jedoch als nachteilig angesehen werden, dass die Folie nach dem Aufbringen auf die Böschung des Kernes, aufgrund des Hangabtriebes oder aufgrund von Windeinwirkung häufig verrutscht. Ein weiterer Nachteil dieses Verfahrens liegt darin, dass die Folie durch im Kernmaterial oder Deckschichtmaterial enthaltene Steine leicht verletzt werden kann, wodurch die Abdichtungsschicht undicht wird.

Der Erfindung liegt die Aufgabe zugrunde, eine Abdeckeinrichtung bereitzustellen, die universell und in jeder gewünschten Form verwendet werden kann und gegenüber den bekannten Abdeckeinrichtungen haltbarer und einfacher in der Anwendung ist.

Die Aufgabe wird durch die im Hauptanspruch angegebene Erfindung gelöst.

Durch den beanspruchten Aufbau aus metallischem Gitterwerk mit fest darauf angebrachter Folie ist die erfindungsgemässe Abdeckeinrichtung in die unterschiedlichsten Formen biegbar. Durch die im Vergleich zum Stand der Technik enge Unterstützung der Kunststoffolie durch das Gitterwerk ist die gesamte Abdeckeinrichtung wesentlich haltbarer. Da die Folie weiterhin fest auf das Gitterwerk aufgeschrumpft ist, bietet sie dem Wind keinerlei Angriffspunkte.

Die Haltbarkeit kann nach Anspruch 2 noch weiter erhöht werden, indem zwischen das Gitterwerk und die aufgeschrumpfte Folie ein dünneres Maschenwerk eingelegt wird. Eine derart unterlegte Kunststoffolie kann praktisch nicht mehr durchstossen werden.

Nach Anspruch 3 kann dann das Gitterwerk gemäss den aufzunehmenden statischen Kräften mehr oder weniger weitmaschig ausgelegt werden.

Die beidseitig aufgeschrumpfte Folie nach Anspruch 4 bietet einen ausgezeichneten Korrosionsschutz und verbessert die Haltbarkeit der Abdeckeinrichtung weiter.

Die Verbindung beider Folien durch Schweissstellen zwischen den Gitteröffnungen nach Anspruch 5 verbessert den Zusammenhalt und gewährleistet, dass die Abdeckeinrichtung auf den individuellen Bedarf zugeschnitten werden kann.

Durch die trotz Biegbarkeit hohe Eigensteifigkeit des Gitterwerks, kann eine entsprechend gebogene Abdeckeinrichtung gemäss Anspruch 6 als selbsttragende Überdachung eingesetzt werden.

Nach Anspruch 7 wird die Abdeckeinrichtung als einfache und kostengünstige, über grössere Spannweiten unterstützungsfrei zu verlegende Überdachung eingesetzt.

Durch die Verwendung einer Abdeckeinrichtung in flacher Form als Abdichtungsschicht beim Herstellen von Gewässerbegrenzungen gemäss Anspruch 8, wird erreicht, dass nicht nur ein Abrutschen der Abdichtungsschicht verhindert wird und eine grössere Sicherheit vor Verletzungen der Abdichtungsschicht durch die im Verbundwerkstoff enthaltene Bewehrung erreicht wird, sondern auch eine leichtere Montage und damit gesenkte Arbeitszeitkosten erzielt werden.

Durch das Verlegen in Bahnen nach Anspruch 9, können Kosten und Arbeitszeit eingespart werden.

Die Erfindung wird nachstehend anhand der Zeichnungen näher erläutert. Es zeigen:

Fig. 1 eine erfindungsgemässe Abdeckeinrichtung in teilweise geschnittener Darstellung,

Fig. 2 eine erfindungsgemässe Abdeckeinrichtung in Form eines Tunnels, beidseitig mit Folie bedeckt und mit einem Maschenwerk versehen,

Fig. 3 eine erfindungsgemässe Abdeckeinrichtung mit einer Soll-Biegestelle,

Fig. 4 eine perspektivische Ansicht einer Abdeckeinrichtung in flacher Form,

Fig. 5 Schnitt V-V aus Fig. 4,

Fig. 6 einen Querschnitt durch eine Gewässerbegrenzung,

Fig. 7 eine auf Abstützungen gelagerte Abdeckeinrichtung.

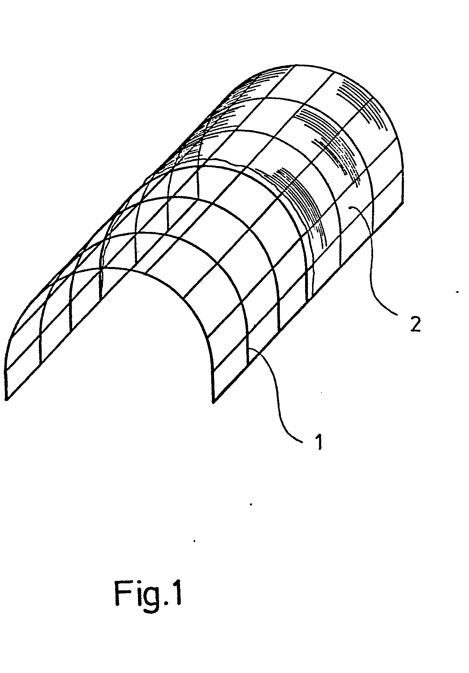

Aus Fig. 1 ist eine tunnelförmig gebogene Abdeckeinrichtung aus einem Gitterwerk 1 und einer flexiblen, aufgeschrumpften Kunststoffolie 2 ersichtlich. Das Gitterwerk 1 besteht aus gekreuzten, biegbaren Metallstäben. Die Kunststoffolie 2 ist eine der üblichen lichtdurchlässigen Schrumpffolien.

Die Abdeckeinrichtung kann hergestellt werden, indem entweder das Gitterwerk 1 in die gewünschte Form gebogen und danach die Folie 2

unter Wärmeeinwirkung aufgeschrumpft wird. Eine zweite Möglichkeit besteht darin, das Gitterwerk 1 in ebenem Zustand mit der Folie 2 zu versehen und erst danach in die gewünschte Form zu biegen.

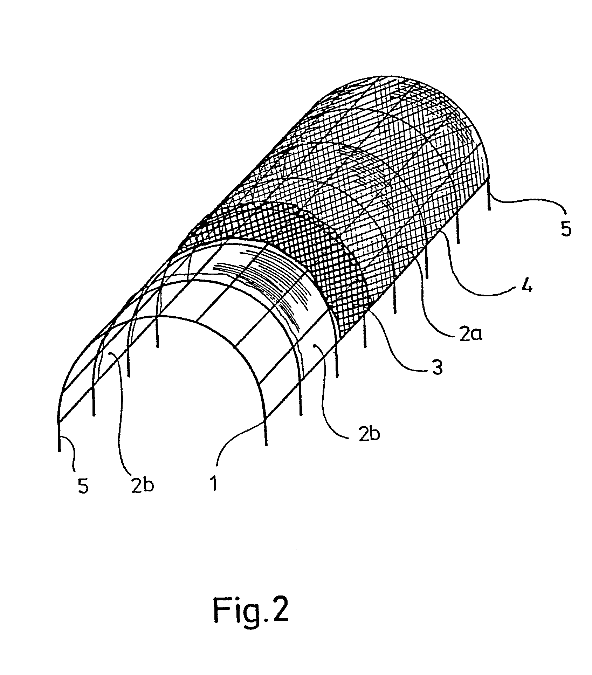

In Fig. 2 ist eine Abdeckeinrichtung annähernd der gleichen Tunnelform ersichtlich. Die Abdeckeinrichtung besteht wiederum aus einem Gitterwerk 1 und diesmal zwei Kunststoffolien 2a und 2b. Zwischen dem Gitterwerk 1 und der oberen, den Witterungseinflüssen ausgesetzten Kunststoffolie 2a befindet sich ein Maschenwerk 3. Das Maschenwerk 3 ist wesentlich dünner und feinmaschiger als das Gitterwerk 1. Die Folien 2a und 2b sind an ihren Kanten 4 und über die gesamte Oberfläche zwischen den Gitter- bzw. Maschenöffnungen miteinander verschweisst und geschrumpft, so dass sie Gitterwerk 1 und Maschenwerk 3 fest zwischen sich einschliessen. Die Grösse der Folien 2a und 2b und die Lage der Schweissstellen 4 sind so ausgelegt, dass vorzugsweise an den Längskanten Stäbe des Gitterwerkes 1 bei 5 über die Folien 2a und 2b und das Maschenwerk 3 vorstehen. Diese vorstehenden Stäbe 5 ergeben auf einfache Weise eine gute Verankerung im Erdboden.

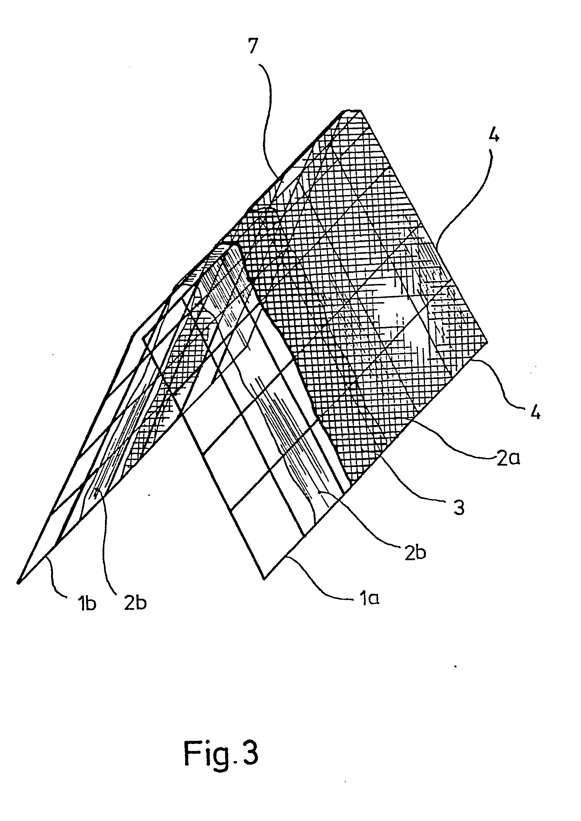

Fig. 3 zeigt eine Ausführungsform einer gebogenen Abdeckeinrichtung, bei der das Gitterwerk 1 relativ steif ausgebildet wurde. Die Wandung der Abdeckeinrichtung besteht aus zwei Abschnitten 1a und 1b des Gitterwerkes 1.

Beide Abschnitte 1a und 1b werden von einem einzigen Stück des Maschenwerkes 3 überdeckt und in die beiden Folien 2a und 2b eingeschweisst und eingeschrumpft. Die Verbindung zwischen den beiden Abschnitten 1a und 1b des Gitterwerkes 1 erfolgt nur durch das Maschenwerk 3 und die beiden Folien 2a und 2b, die eine grössere Biegbarkeit als das Gitterwerk 1 aufweisen. Es bildet sich somit eine Soll-Biegelinie 7, so dass die Abdeckeinrichtung unter unterschiedlichen Firstwinkeln als Zeltdach aufgestellt werden kann.

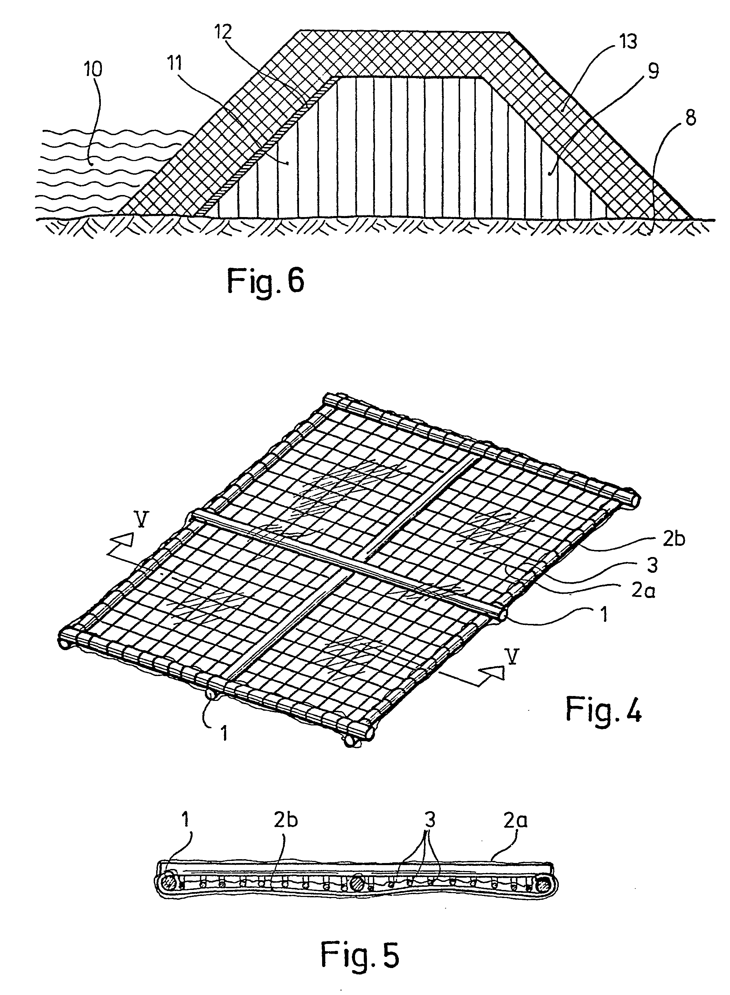

In Fig. 4 ist eine Abdeckeinrichtung in Form einer flachen Tafel dargestellt. Ihr Aufbau aus dem Gitterwerk 1, dem Maschenwerk 3 und zwei Kunststoffolien 2a und 2b, entspricht dem der Figuren 2 und 3.

Fig. 5 zeigt einen Querschnitt längs der Linie V–V von Fig. 4. Diese Figur verdeutlicht, dass Gitter- und Maschenwerk 1 und 3 durch die in den Zwischenräumen mit der jeweils gegenüberliegenden Folie 2a verschweisste Folie 2b, die durch das Aufschrumpfen eng an den Drähten des Maschenwerks 3 und den Stäben des Gitterwerks 1 anliegt, fest miteinander verbunden sind.

In Fig. 6 ist ein Querschnitt durch eine Gewässerbegrenzung dargestellt. Bei dieser Gewässerbegrenzung, die sowohl ein Deich, ein Flussdamm oder ein Ufer eines künstlichen Sees sein kann, wird zunächst auf eine Grundschicht 8 ein aus Erde, Lehm oder Kies bestehender Kern 9 aufgeschüttet, dessen Höhe grösser als die maximal zu erwartende Wasserstand sein muss. Eine dem Gewässer 10 zugewandte Böschung 11 wird mit einer Abdichtungsschicht 12 bedeckt. Die Abdichtungsschicht 12 besteht aus einer ungebogenen Abdeckeinrichtung in einer der vorstehend beschriebenen Ausführungsvarianten, die in grösseren, rechteckigen Platten oder Bahnen auf die Böschung 11 aufgelegt wird. Durch das Gewicht und die Festigkeit der Abdeckeinrichtung bedingt, kann nun die aus Erdmaterial bestehende Deckschicht 13 auf diese Abdichtungsschicht 12 geschüttet werden, ohne dass ein Schutz der Abdichtungsschicht gegen Verrutschen oder Beschädigung vorgesehen werden muss.

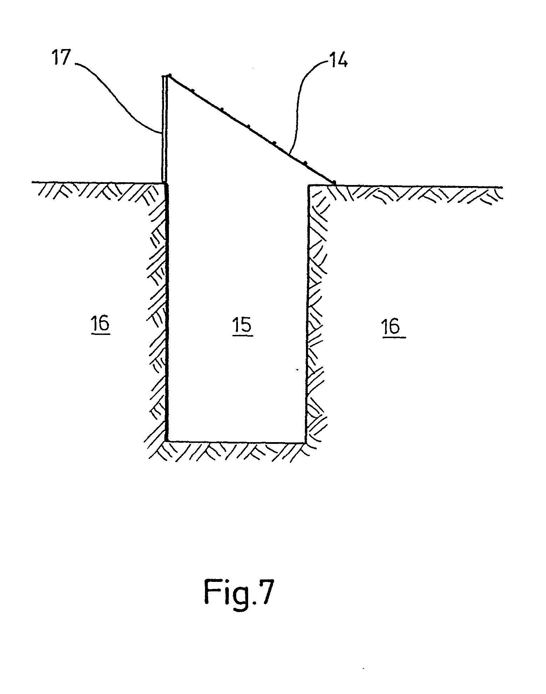

In Fig. 7 ist ein weiteres Beispiel für die vielfältigen Anwendungsgebiete der flachen Abdeckeinrichtung dargestellt. Eine Abdeckeinrichtung der in Fig. 4 beschriebenen Art, wurde als Dach 14 über eine Bodengrube 15 gelegt. Eine Seite des Daches 14 liegt auf dem die Grube 15 umgebenden Erdreich 16 auf. Die andere Seite ist auf Stützen 17 gelagert. Als Stützen 17 sind ebenfalls Abdeckeinrichtungen in Form von flachen Streifen einsetzbar. Das Dach 14 kann nach Bedarf mit Erdreich und/oder Schnee bedeckt werden.

Die Abdeckeinrichtung nach Fig. 1 wird hergestellt, in dem die Kunststoffolie auf das gebogene Gitterwerk 1 gelegt und aufgeschrumpft wird.

Die Abdeckeinrichtung nach den Fig. 2 bis 7 wird bevorzugt hergestellt, indem auf einem Transportband zuunterst die Folie 2b, darauf eine einzige oder zwei nebeneinanderliegende Bahnen 1a oder 1b des Gitterwerkes 1, darüber das Maschenwerk 3 und schliesslich die Folie 2a aufgelegt werden. Alle Werkstoffe werden bevorzugt kontinuierlich aus einem Vorrat, insbesondere von einer Vorratsrolle, abgezogen. Das Transportband befördert die übereinanderliegenden Materialien durch eine Schrumpf- und Schweissvorrichtung, in der die Folien durch Wärmeeinwirkung erweicht, durch geeignete Mittel gegeneinandergedrückt, so dass sie an ihren Längskanten und in den Gitter- bzw. Maschenöffnungen miteinander verschweissen, und geschrumpft werden. Das kontinuierliche Band der fertigen Abdeckeinrichtung wird entweder aufgerollt oder in Stücke der gewünschten Grösse geteilt und je nach Bedarf gebogen.

Das Gitterwerk 1 wird aus Bändern bzw. Stäben durch Kreuzen oder Flechten unter unterschiedlichen Winkeln hergestellt. Der Querschnitt der verwendeten Stäbe und die Maschenweite des Gitterwerkes 1 richten sich nach der notwendigen statischen Festigkeit. Als Werkstoffe kommen hauptsächlich Baustahl bzw. Aluminium und seine Legierungen in Betracht. Für die Ausführungsform nach den Figuren 3 bis 7 können jedoch auch, eventuell gespritzte, Kunststoffgitter verwendet werden.

Die Kunststoffolie 2 ist eine der üblichen Schrumpffolien, die in unterschiedlichen Dicken je nach Verwendungszweck und unterschiedlicher Lichtdurchlässigkeit im Handel sind.

Als Maschenwerk 3 kann jedes dünne Gebilde aus Metall oder Kunststoff in den verschiedensten Bindungsarten verwendet werden. Das Maschenwerk 3 wird durch das Gitterwerk 1 so unterstützt, dass es weder beim Schrumpfen noch beim späteren Gebrauch nennenswerte Zug- bzw. Druckkräfte in Längsrichtung aufzunehmen hat. Die Dicke des Maschenwerkes 3 und seine Maschenweite richtet sich deshalb nur nach der Biegebeanspruchung, d.h. nach den aufzunehmenden Querkräften, im späteren Gebrauch und dem Grad der gewünschten Lichtdurchlässigkeit.

Die Erfindung ist nicht auf die beschriebenen und gezeichneten Ausführungsbeispiele beschränkt. Die einzelnen Merkmale können ohne weiteres untereinander ausgetauscht werden. So kann z.B. das Zeltdach nach Fig. 3 ebenfalls mit vorstehenden Stäben 5 versehen sein. Auch die Form, in die die Abdeckeinrichtung gebracht wird, kann variieren. So kann z.B. die Ausführungsform nach Fig. 3 mit drei Bahnen des Gitterwerkes und somit zwei Soll-Biegestellen versehen sein, so dass sich beim Aufstellen ein kanalförmiges Profil ergibt. Die tunnelförmig gebogenen Abdeckeinrichtungen können, bei entsprechender Grösse, zum Bau von igluähnlichen Unterkünften verwendet werden, da sie durchaus in der Lage sind, dem Gewicht des aufgeschütteten Erdreichs und/oder Schnee standzuhalten.

Flache Abdeckeinrichtungen können weiterhin als mitführbare Behelfsunterstände, beispielsweise für Expeditionen, Verwendung finden.

Die Abdeckeinrichtung nach Fig. 6 ist nicht nur zur Abdichtung der Uferböschung brauchbar, sondern kann auch unter der Gewässersohle verlegt werden.

Anwendungsmöglichkeiten ergeben sich ausserdem in Landwirtschaft und auf Baustellen, beispielsweise zum Auskleiden von Erdgruben für Bodensilos oder zum behelfsmässigen Abdichten von Türen und Fenstern auf der Baustelle.

## Patentansprüche

1. Abdeckeinrichtung aus einem Traggerüst mit einem Gitterwerk und einer dieses überspannenden, zumindest die Gitteröffnungen abdeckenden, flexiblen Kunststoffolie, dadurch gekennzeichnet, dass die flexible Kunststoffolie (2) eine Schrumpffolie ist, die auf das Gitterwerk (1) aufgeschrumpft ist.

2. Abdeckeinrichtung nach Anspruch 1, dadurch gekennzeichnet, dass zwischen dem Gitterwerk (1) und der flexiblen Kunststoffolie (2) ein die Gitteröffnungen überlagerndes Maschenwerk (3) aufgebracht ist.

3. Abdeckeinrichtung nach Anspruch 2, dadurch gekennzeichnet, dass das Gitterwerk (1) aus mit grosser Maschenweite gekreuzten, biegbaren Metallstäben besteht und das Maschenwerk (3) demgegenüber feinmaschiger und dünner ist.

4. Abdeckeinrichtung nach einem der Ansprüche 1 bis 3, dadurch gekennzeichnet, dass die flexible Kunststoffolie (2a, 2b) beidseitig aufgebracht ist.

5. Abdeckeinrichtung nach Anspruch 4, dadurch gekennzeichnet, dass die beidseitig aufgebrachten Kunststoffolien (2a, 2b) zwischen den Gitteröffnungen des Gitterwerkes (1) miteinander verbunden sind.

6. Abdeckeinrichtung nach einem der Ansprüche 1 bis 5, gekennzeichnet durch eine Verwendung in gebogener Form als selbsttragende Überdachung.

7. Abdeckeinrichtung nach einem der Ansprüche 1 bis 5, gekennzeichnet durch eine Verwendung in flacher Form als auf Abstützungen (17) auflegbare Überdachung (14).

8. Abdeckeinrichtung nach einem der Ansprüche 1 bis 5, gekennzeichnet durch eine Verwendung in flacher Form als Abdichtungsschicht (12) beim Errichten von Gewässerbegrenzungen.

9. Abdeckeinrichtung nach Anspruch 8, gekennzeichnet durch eine Verwendung in fortlaufenden Bahnen.

## Claims

1. A covering device consisting of a supporting structure comprising a latticework and a flexible plastics film straddling the same and covering at least the latticework openings, characterised in that the flexible plastics film (2) is a shrink film which is shrunk on to the latticework (1).

2. A covering device according to claim 1, characterised in that a meshwork (3) surmounting the latticework openings is provided between the latticework (1) and the flexible plastics film (2).

3. A covering device according to claim 2, characterised in that the latticework (1) consists of flexible metal rods or bars crossed with a large mesh width and the meshwork (3) is of a finer mesh and thinner in comparison therewith.

4. A covering device according to any one of claims 1 to 3, characterised in that the flexible plastics film (2a, 2b) is applied on both sides.

5. A covering device according to claim 4, characterised in that the plastic films (2a, 2b) applied on both sides are interconnected between the openings of the latticework (1).

6. A covering device according to any one of claims 1 to 5, characterised by use in bent form as a self-supporting roofing.

7. A covering device according to any one of claims 1 to 5, characterised by use in a flat form as a roofing (14) adapted to fitting on supports (17).

8. A covering device according to any one of claims 1 to 5, characterised by use in flat form as a sealing layer (12) in the making of boundaries for water-courses.

9. A covering device according to claim 8, characterised by use in continuous webs.

## Revendications

1. Dispositif de recouvrement constitué d'une carcasse de support, comprenant un treillage et une feuille flexible en matière plastique qui coiffe ce treillage et recouvre au moins les ouvertures de l'entrelacs, caractérisé par le fait que la feuille flexible (2) en matière plastique est une feuille thermorétractible qui est thermorétractée sur le treillage (1).

2. Dispositif de recouvrement selon la revendication 1, caractérisé par le fait qu'un maillage (3), venant en superposition des ouvertures de l'entrelacs, est interposé entre le treillage (1) et la feuille flexible (2) en matière plastique.

3. Dispositif de recouvrement selon la revendication 2, caractérisé par le fait que le treillage (1) est constitué par des baguettes métalliques flexibles, entrecroisées avec une grande largeur de mailles, le maillage (3) étant comparativement plus mince et à mailles plus fines.

4. Dispositif de recouvrement selon l'une des revendications 1 à 3, caractérisé par le fait que la feuille flexible (2a, 2b) en matière plastique est appliquée de part et d'autre.

5. Dispositif de recouvrement selon la revendication 4, caractérisé par le fait que les feuilles (2a, 2b) en matière plastique appliquées de part et d'autre sont reliées l'une à l'autre entre les ouvertures de l'entrelacs du treillage (1).

6. Dispositif de recouvrement selon l'une des revendications 1 à 5, caractérisé par une utilisation, sous forme cintrée, en tant que couverture autoportante.

7. Dispositif de recouvrement selon l'une des revendications 1 à 5, caractérisé par une utilisation, sous forme aplatie, en tant que toiture (14) pouvant être posée sur des soutiens (17).

8. Dispositif de recouvrement selon l'une des revendications 1 à 5, caractérisé par une utilisation, sous forme aplatie, en tant que couche d'étanchement (12) lors de l'aménagement de délimitations de cours d'eau.

9. Dispositif de recouvrement selon la revendication 8, caractérisé par une utilisation sous forme de bandes continues.

Fig.1

Fig.2

Fig.3

Fig. 6

Fig. 4

Fig. 5

Fig.7